# EUROPÄISCHE PATENTANMELDUNG

(11) **EP 4 046 747 A2**
(43) Veröffentlichungstag der Anmeldung: **24.08.2022**
(21) Anmeldenummer: 22157077.3
(22) Anmeldetag: 16.02.2022
(51) Int. Cl.: B23Q 11/08

(54) **SCHUTZABDECKUNG FÜR EINE MASCHINE, INSBESONDERE MASCHINENSCHUTZABDECKUNG**

(30) Priorität: 19.02.2021 DE 202021100847 U
(71) Anmelder: Möller Werke GmbH, 33649 Bielefeld (DE)
(72) Erfinder: Guntermann, Janik, 33647 Bielefeld (DE); Redeker, Bernd, 33758 Schloß Holte-Stukenbrock (DE)
(74) Vertreter: Schober, Mirko

(57) **Zusammenfassung**

Die Erfindung betrifft eine Schutzabdeckung (1) mit einer Vielzahl an Abschirmelementen (2-7), die jeweils einen ersten Schenkel (2a-7a) und einen demgegenüber abgewinkelten zweiten Schenkel (2b-7b) aufweisen. Deren durch Verbinder (9.1-9.4) jeweils relativ zueinander beweglich miteinander verketteten ersten Schenkel (2a-7a) sind so mit ihren jeweiligen Deckflächen einander gegenüberliegend angeordnet, dass die zweiten Schenkel (2b-7b) sich zumindest teilweise unter Ausbildung einer längenveränderlichen Abschirmfläche (8) überdecken. Mindestens einer der Verbinder (9.1-9.4) kann aus einem plattenförmigen Grundkörper gebildet sein, welcher zwei über ein in dessen Material hinein geprägtes Filmscharniers gelenkig miteinander verbundene Wandabschnitte besitzt, an deren freien Enden jeweils ein Fußabschnitt angelenkt ist. Alternativ kann jeder Verbinder (9.1 -9.4) einen Mittelsteg mit entweder zwei oder mehr schwenkbar an diesem angeordneten Armen besitzen, welche abwechselnd mit einem der unmittelbar benachbarten Abschirmelement (2-7) verbunden sind.

## Beschreibung

Die Erfindung betrifft eine Schutzabdeckung für eine Maschine, insbesondere Maschinenschutzabdeckung, mit den Merkmalen im Oberbegriff der Ansprüche 1 bis 3.

Neben dem rein optischen Verdecken dienen Schutzabdeckungen vor allem der Abschirmung beweglicher Maschinenbauteile. Hier erfüllen sie primär die sich bereits aus Sicherheitsgründen oder/und dem Schutz vor Verschmutzungen ergebenden Aufgaben, wie etwa als bauliche Barriere gegenüber Spänen, Schmierstoffen oder Kühlmitteln. Je nach Einsatzzweck können diese aus einem Innen- sowie Außenfalten aufweisenden Faltenbalg bestehen oder einen daraus gebildeten längenveränderbaren Basiskörper umfassen. Ohne einen Faltenbalg auskommende Ausführungsformen (faltenbalglos) weisen sich zumindest teilweise überdeckende und zumeist quer zu ihrer Längsrichtung relativ zueinander bewegliche Abschirmelemente auf. Bei den Abschirmelementen kann es sich beispielsweise um Lamellen aus Blech oder einem anderen geeigneten Material handeln. Verbundwerkstoffe aus wenigstens zwei voneinander unterschiedlichen Materialien sind ebenfalls möglich.

Die eingesetzten Abschirmelemente weisen eine Form mit einem zumeist L-förmigen und insofern zwei gegeneinander abgewinkelte Schenkel umfassenden Querschnitt auf. Während die Deckseiten der jeweils ersten Schenkel der Abschirmelemente einander zugewandt sind, bilden die sich dabei zumindest teilweise überdeckenden zweiten Schenkel eine geschlossene Abschirmfläche aus. Deren Längenänderbarkeit basiert auf den zumindest begrenzt variierbaren Abständen zwischen ersten Schenkeln. Um die zur Beibehaltung der Abschirmfläche nötige Überdeckung der zweiten Schenkel sowie den Zusammenhalt der einzelnen Abschirmelemente zu gewährleisten, sind diese untereinander verkettet. Hierzu können deren sich jeweils unmittelbar gegenüberliegenden ersten Schenkel durch Verbinder beweglich untereinander gekoppelt sein. Bei diesen Verbindern kann es sich um Federelemente handeln, deren Federwiderstand entweder in oder gegen die Richtung der möglichen Annäherung der ersten Schenkel gerichtet ist. Im Ergebnis wird so entweder die Längung oder die Verkürzung der durch die zweiten Schenkel gebildeten Abschirmfläche durch die Verbinder zumindest unterstützt. Gleichzeitig können zumindest einige dieser Verbinder dazu ausgebildet sein, die Entfernung zweier unmittelbar benachbarter erster Schenkel der Abschirmelemente zu begrenzen, so dass die Abschirmfläche auch in der maximal möglichen Auszugslänge der Schutzabdeckung stets in sich geschlossen bleibt.

Um eine möglichst kompakte Verkürzung der Schutzabdeckung zu erhalten, müssen deren Verbinder entsprechende Anforderungen erfüllen. Diese sollten eine größtmögliche Annäherung der über sie verbundenen ersten Schenkel der Abschirmelemente ermöglichen. Da die Verbinder in der Regel zwischen den ersten Schenkeln der Abschirmelemente angeordnet sind, ist daher deren möglichst flach bauende Ausgestaltung gewünscht.

Beispielsweise der DE 202 20 812 U1 ist bereits eine faltenbalglose Schutzabdeckung mit L-förmigen Abschirmelementen zu entnehmen. Die einzelnen Abschirmelemente sind als Blechlamellen ausgeführt, deren mit ihren Deckflächen gegenüberliegenden ersten Schenkel durch federnde Verbinder miteinander verbunden sind. Jeder dieser Verbinder setzt sich aus zwei Blattfeder-Verbindungselementen zusammen, deren Endbereiche aneinander befestigt sind. Jedes dieser identisch ausgebildeten und sich in Längsrichtung der Abschirmelemente erstreckenden Blattfeder-Verbindungselemente ist so ausgestaltet, dass deren sich jeweils zwischen ihren Endbereichen erstreckenden Abschnitte voneinander beabstandet sind. Hierdurch lässt sich jeder aus zwei miteinander verbundenen Blattfeder-Verbindungselementen bestehende und insofern zweiteilige Verbinder gegen seine Rückstellkraft elastisch zusammendrücken, wobei der Abstand zwischen seinen beiden Blattfeder-Verbindungselementen das hierfür zur Verfügung stehende maximale Maß definiert. Die beiden im entspannten Zustand voneinander beabstandeten Abschnitte jedes dieser Verbinder dienen der Befestigung der einzelnen Abschirmelemente, welche hierfür jeweils über ihren ersten Schenkel beispielsweise durch Nieten an eines der beiden Blattfeder-Verbindungselemente eines Verbinders fest angebunden sind.

Die EP 1 980 361 A1 offenbart eine Schutzabdeckung mit zwei Varianten der die Abschirmelemente miteinander verkettenden Verbinder, von denen eine der aus der DE 202 20 812 U1 bekannten Ausführungsform entspricht. Die andere Variante zeigt Verbinder, deren beiden Blattfeder-Verbindungselemente materialeinheitlich einstückig ausgebildet sind und eine ebenfalls materialeinheitlich einstückig an diese angebundene Stabilisierungsblattfeder aufweisen. Die einen V-förmigen Querschnitt aufweisende Stabilisierungsblattfeder ist quer zur Längsrichtung der Abschirmelemente in sich elastisch faltbar, um den Bewegungen der Blattfeder-Verbindungselemente folgen zu können. Die Stabilisierungsblattfedern wirken der sonst zumindest begrenzt möglichen relativen Verlagerung der Abschirmelemente in deren Längsrichtung entgegen, woraus sich ein präziseres Verhalten der Schutzabdeckung während ihrer Längenänderung ergibt.

Aus der DE 20 2004 018 318 U1 geht eine weitere Ausgestaltung einer Schutzabdeckung hervor, deren die Abschirmelemente aneinander kettenden Verbinder eine im Wesentlichen ähnliche Form und Ausrichtung wie die aus der DE 202 20 812 U1 vorbekannten Ausführungen aufweisen. Im Unterschied zu den dort einstückig ausgebildeten Blattfeder-Verbindungselementen jedes Verbinders sind diese hierbei jeweils in zwei Federbügel aufgetrennt, deren einander zugewandten freien Enden über ein Koppelelement miteinander gekoppelt sind. Jedes dieser Koppelelemente weist eine Ausnehmung auf, in der zwei mit jeweils einem freien Ende eines solchen Federbügels verbundene Ringscheiben verschieblich geführt sind. Im Ergebnis wird so eine relative Beweglichkeit der beiden an jeweils dem ersten Schenkel eines Abschirmelements der Schutzabdeckung befestigten Federbügel eines Verbinders erreicht.

Die EP 1 871 568 B1 sowie WO 2007/031112 A1 zeigen jeweils eine Schutzabdeckung, deren Abschirmelemente ebenfalls über Verbinder miteinander verkettet sind. Jeder dieser als blattfederartiges Kopplungselement ausgestalteten Verbinder ist aus zwei im Querschnitt jeweils Z-förmigen Federelementen zusammengesetzt. Hierdurch weist jedes dieser Federelemente zwei voneinander beabstandete Arme und einen die beiden Arme miteinander verbindenden Steg auf. Die Rückstellkraft jedes dieser Federelemente ergibt sich aus dessen einstückigen Ausgestaltung. Jeweils zwei dieser Federelemente sind zu einem Verbinder zusammengesetzt, indem einer der beiden Arme eines Federelements mit einem der beiden Arme eines anderen Federelements fest verbunden ist. Dabei sind die beiden Federelemente jedes Verbinders so zueinander ausgerichtet, dass deren freien Arme voneinander beabstandet sind, während deren Stege eine V-Form zwischen sich einschließen. Die Anbindung der Verbinder an die Abschirmelemente erfolgt über eine Festlegung ihrer freien Arme an die mit ihren Deckflächen einander zugewandten ersten Schenkel der Abschirmelemente. Da die Stege der Verbinder sich quasi in Längsrichtung der Abschirmelemente erstrecken, ist eine quer zur Längenänderungsrichtung der Schutzabdeckung mögliche relative Verlagerbarkeit der einzelnen Abschirmelemente untereinander gegeben. Um diese Bewegungsmöglichkeit zu kompensieren, umfasst die Schutzabdeckung zusätzlich einzelne Stabilisierungs-Verbinder, deren Orientierung eine gegenüber den übrigen Verbindern um 90° gedrehte Ausrichtung aufweist. Die Stabilisierungs-Verbinder weisen ebenfalls jeweils zwei eine V-Form zwischen sich einschließende Stege mit an deren freien Enden angeordneten Armen auf. Im Unterschied zu den anderen Verbindern sind die Stabilisierungs-Verbinder einstückig ausgebildet, wobei zwischen den Übergängen der Stege jedes Stabilisierungs-Verbinders untereinander und hin zu den Armen einzelne Aussparungen angeordnet sind. Die jeweils eine Biegelinie definierenden Aussparungen dienen dem gezielten Biegeverhalten der Stabilisierungs-Verbinder.

Weiterhin ist die DE 20 2006 006 412 U1 auf ein Koppelelement im Sinne eines Verbinders sowie eine damit ausgestattete Schutzabdeckung gerichtet. Jeder dieser Verbinder ist durch einen einstückigen Grundkörper aus Kunststoff gebildet. Deren jeweiliger Grundkörper besitzt eine Trapezform, welche zwei parallel zueinander beabstandete lange Federschenkel und zwei diese endseitig miteinander verbindende kurze Basisstege aufweist. An einem ersten Basissteg sind zwei Rastnasen sowie zwei voneinander weg weisende Haltefortsätze angeordnet, während der zweite Basissteg eine Halteplatte mit einer daran angeordneten Gleitführungsnase besitzt. Die Abschirmelemente der Schutzabdeckung sind so gestaltet, dass der Grundkörper eines Verbinders über seinen ersten Basissteg und dessen Rastnasen sowie Haltefortsätze mit korrespondierenden Ausnehmungen eines Abschirmelements ortsfest koppelbar ist. Der zweite Basissteg ist mit einem ein Langloch aufweisenden Bereich eines benachbarten Abschirmelements entsprechend linear verschieblich koppelbar, indem dessen Halteplatte das Abschirmelement zumindest teilweise umgreift, während dessen Gleitführungsnase innerhalb des Langlochs angeordnet ist.

Mit der DE 10 2011 113 374 A1 wurde eine Schutzabdeckung bekannt, deren ihre Abschirmelemente miteinander verkettenden Verbinder einstückig ausgebildet sind. Jeder dieser Verbinder weist zwei eine V-Form zwischen sich einschließende Schenkel auf, deren jeweiliges Ende unter Ausbildung eines Armes gegenüber dem zugehörigen Schenkel abgewinkelt ist. Die zu einer Seite des jeweiligen Verbinders weisenden Arme weisen in Richtung seiner V-Form.

Der WO 2012/175232 A1 sowie der EP 2 724 071 A1 ist jeweils eine Schutzabdeckung zu entnehmen, wobei deren ihre Abschirmelemente miteinander verkettenden Verbinder eine wie bereits aus der WO 2007/031112 A1 bekannte Zweiteilung aufweisen. Dabei sind deren zu Armen abgewinkelten Enden aber nicht in, sondern entgegen der Richtung der eine V-Form zwischen sich einschließenden Schenkel ausgerichtet. Überdies weisen die Verbinder ein deren Arme miteinander verbindendes Zugband auf, um den Öffnungswinkel zwischen den Schenkeln und damit die Auszugslänge der Schutzabdeckung zu begrenzen.

Auch die DE 10 2014 113 113 A1 ist auf eine Schutzabdeckung gerichtet, deren ihre Abschirmelemente verkettenden Verbinder jeweils einteilig ausgebildet sind. Die Verbinder weisen dabei jeweils einen im Wesentlichen Z-förmigen Querschnitt auf.

Die DE 10 2014 110 571 A1 zeigt eine Schutzabdeckung, deren Abschirmelemente über Verbinder aus Kunststoff miteinander verkettet sind. Jeder dieser Verbinder weist zwei über ein Filmscharnier miteinander gekoppelte Schenkel auf, deren an ihrem jeweiligen freien Ende ausgebildeten Konturen mit in den Abschirmelementen angeordneten Öffnungen korrespondieren. Die Öffnungen sind so groß gestaltet, dass bei vollständig eingefahrener Schutzabdeckung die Schenkel der Verbinder bis in die jeweils zugehörige Öffnung hinein verschwenkt sind.

Aus der EP 3 663 038 A1 ist eine Schutzabdeckung bekannt, deren Abschirmelemente in jeweils einem ihrer L-förmig zueinander ausgerichteten Schenkeln eine Vielzahl an unter Ausbildung von paarweise nebeneinander angeordneten Laschen eingebrachte Ausstanzungen aufweisen. Die Laschen eines solchen Paares lassen sich in entgegengesetzten Richtungen aus der Ebene des zugehörigen Schenkels herausschwenken, wobei deren freien Enden eine Kontur besitzt, die mit in den benachbarten Abschirmelementen angeordneten Schlitzöffnungen in Eingriff bringbar sind. Die Laschen dienen als Verbinder, um die einzelnen Abschirmelemente miteinander zu verketten.

Die DE 20 2019 105 041 U1 sowie die DE 20 2019 105 044 U1 offenbaren jeweils eine Schutzabdeckung, der ein möglichst leichter Austausch seiner die Abschirmelemente miteinander verkettenden Verbinder zugrunde liegt. Hierzu sind Befestigungsmittel an den Abschirmelementen vorgesehen, an denen die Verbinder im Sinne einer Klickverbindung lösbar festlegbar sind.

Um bei vollständig eingefahrener Schutzabdeckung möglichst kompakte Abmessungen zu erhalten, weisen die bisher bekannten Ausführungsformen mitunter aufwendige Ausgestaltungen und Bauformen auf. Großflächige Ausnehmungen zur teilweisen Aufnahme der Verbinder können dabei zu einer unerwünschten Schwächung der einzelnen Bauteile führen.

Der vorliegenden Erfindung liegt daher die Aufgabe zugrunde, eine gattungsgemäße Schutzabdeckung dahingehend weiterzuentwickeln, dass mit dieser trotz möglichst wirtschaftlicher Herstellungsweise ein möglichst kompaktes Zusammendrückmaß erreichbar ist.

Diese Aufgabe wird durch eine Schutzabdeckung mit den Merkmalen von Anspruch 1 gelöst. Zwei weitere Lösungen dieser Aufgabe findet sich in den Merkmalen von Anspruch 2 und Anspruch 3. Vorteilhafte Ausgestaltungen sind Gegenstand der jeweils abhängigen Unteransprüche.

Nach der ersten Ausführungsform schlägt die Erfindung eine Schutzabdeckung vor, bei der jeder Verbinder wenigstens eine Biegelinie aufweist, entlang welcher zumindest ein Teil des Verbinders gegenüber einem anderen Teil des Verbinders schwenkbar ist. Mindestens einer der Verbinder ist aus einem plattenförmigen Grundkörper gebildet, welcher zwei über eine Biegelinie gelenkig miteinander verbundene Wandabschnitte besitzt, an deren freien Enden jeweils ein Fußabschnitt angelenkt ist. Jene die beiden Wandabschnitte gelenkig miteinander verbindende Biegelinie ist unter Ausbildung eines Filmscharniers in das Material des zugehörigen Verbinders hinein geprägt. Dies meint, dass die jeweilige Biegelinie beziehungsweise das jeweilige Filmscharnier ohne etwaigen Materialabtrag ausgebildet ist. Demgegenüber basiert die erforderliche Querschnittsreduzierung auf eine Materialverdrängung oder/und Materialkomprimierung. Unter Prägen wird im Rahmen der Erfindung sowohl eine zur jeweiligen Oberfläche senkrecht verlaufende lineare oder/und parallel zur Oberfläche verlaufende rollende Bewegung des hierfür notwendigen Werkzeugs verstanden. Hierdurch wird eine Vertiefungslinie im Sinne einer Nut erzeugt, deren Materialverdrängung bevorzugt aus einem kalten, also ohne einen mit Aufschmelzen und/oder Abfräsen einhergehenden, Pressvorgang heraus resultiert. Bevorzugt kann die Prägung dabei ohne etwaiges lokales Durchstanzen oder/und Schlitzen ausgebildet sein, so dass sich ein jeweils lückenloses Filmscharnier ergibt. Dabei kann die verbliebene Materialstärke im Bereich der Biegelinie beziehungsweise des Filmscharniers bevorzugt gleichbleibend sein.

Gegenüber den sonst bei flächigen Materialien (wie beispielsweise Folien oder Platten) durch Materialabtrag oder/ und Materialverlust, wie beispielsweise mittels Fräsen oder/ und Stanzen, erzeugten Biegelinien ermöglicht die durch Prägen erzeugte Biegelinie beziehungsweise das auf diese Weise ausgebildete Filmscharnier eine verbesserte Biegung des Materials, was im Ergebnis zu einem deutlich kompakteren Zusammendrückmaß der Schutzabdeckung führt. Beispielsweise benötigen durch eine perforierte Loch- oder Schlitzreihe erzeugte Biegelinien beim Knicken größere Biegeradien, was zu einem nicht vollständig möglichen Aufeinanderlegen der gegeneinander schwenkbaren Teile eines Verbinders führt. Überdies erzeugt eine geprägte Biegelinie ein überaus haltbares und besonders einfach herstellbares Filmscharnier, bevorzugt bei einem aus Kunststoff gebildeten Verbinder.

Die Erfindung sieht ferner vor, dass Öffnungen in den Fußabschnitten der Wandabschnitte angeordnet sein können.

Wenigstens einer der Fußabschnitte kann ebenfalls über ein Filmscharnier an dem zugehörigen Wandabschnitt angelenkt sein. In Summe weist ein solcher Grundkörper wenigstens ein Filmscharnier, in bevorzugter Ausführung insgesamt drei Filmscharniere, auf. Trotz der Tatsache, dass sich die beiden Wandabschnitte bei einer maximalen Annäherung der ersten Schenkel zweier unmittelbar zueinander benachbarter Abschirmelemente quasi aufeinanderlegen, tragen die Öffnungen weiterhin dazu bei, den jeweiligen Überstand der zur Kopplung dieses Verbinders mit zwei Abschirmelementen erforderlichen Verbindungsmittel dann zumindest teilweise aufzunehmen. Hierdurch lässt sich das Zusammendrückmaß der Schutzabdeckung weiterhin auf ein Minimum beschränken.

Zumindest das die beiden Wandabschnitte dieses Grundkörpers gelenkig miteinander verbindende Filmscharnier kann durch eine Querschnittskomprimierung oder/und einen begrenzten Materialabtrag ausgebildet sein. Selbstverständlich kann auch wenigstens eines der die Fußabschnitte gelenkig anbindenden Filmscharniere auf eine solche Art ausgebildet sein.

Alternativ kann wenigstens eine dieser als Filmscharnier ausgestalteten Biegelinien über eine Aneinanderreihung von Aussparungen gebildet sein, wie beispielsweise durch Löcher oder/und Schlitze oder eine Kombination hieraus.

Aufgrund der Ausgestaltung der beiden Wandabschnitte dieses Verbinders wird es als besonders vorteilhaft angesehen, wenn die Öffnungen dann in den Fußabschnitten der beiden Wandabschnitte angeordnet sind.

Alternativ oder ergänzend kann wenigstens einer der Verbinder aus zwei plattenförmigen Grundkörpern gebildet sein. Diese weisen jeweils einen Wandabschnitt mit an dessen beiden freien Enden jeweils über ein Biegelinie angelenkten Fußabschnitten auf. Die beiden Grundkörper dieses Verbinders sind dann über jeweils einen ihrer Fußabschnitte miteinander verbunden. Bei wenigstens einer besagter Biegelinien kann es sich um ein Filmscharnier handeln. Alternativ kann wenigstens eine dieser Biegelinien über eine Aneinanderreihung von Aussparungen gebildet sein, wie beispielsweise durch Löcher oder/und Schlitze oder eine Kombination hieraus. Denkbar ist auch eine reine Abbiegung ohne etwaige vorherige Behandlung des Materials.

Nach einer zweiten Ausführungsform als weitere bevorzugte alternative Lösung sieht die Erfindung vor, dass jeder der Verbinder einen Mittelsteg mit mindestens drei schwenkbar an dem Mittelsteg angeordneten Armen besitzen kann. Von diesen sind zwei Arme über ihren jeweiligen freien Endabschnitt mit demselben Abschirmelement verbunden, während ein zu diesem Abschirmelement unmittelbar benachbartes Abschirmelement mit dem freien Endabschnitt des mindestens einen übrigen Arms verbunden ist. Insbesondere bei Anordnung der Arme nebeneinander ergibt sich ein überaus kompaktes Zusammendrückmaß für die Schutzabdeckung.

Nach einer dritten Ausführungsform als weitere bevorzugte alternative Lösung sieht die Erfindung vor, dass jeder der Verbinder einen Mittelsteg mit nur zwei schwenkbar an dem Mittelsteg angeordneten Armen besitzen kann. Von diesen ist ein Arm über seinen freien Endabschnitt mit einem der Abschirmelemente verbunden, während ein zu diesem Abschirmelement unmittelbar benachbartes Abschirmelement mit dem freien Endabschnitt des anderen Arms verbunden ist. Insbesondere bei Anordnung der Arme nebeneinander ergibt sich ein überaus kompaktes Zusammendrückmaß für die Schutzabdeckung.

Nach einer vorteilhaften Weiterbildung kann dabei jeder Verbinder wenigstens eine Biegelinie aufweisen, entlang welcher zumindest ein Teil des Verbinders gegenüber einem anderen Teil des Verbinders schwenkbar ist. Dabei kann jede dieser Biegelinie unter Ausbildung eines, insbesondere lückenlosen, Filmscharniers in das Material des zugehörigen Verbinders hinein geprägt sein.

Mit Bezug auf wenigstens eine der vorgenannten Ausführungsformen kann jeder der Verbinder über jeweils wenigstens ein Befestigungsmittel an den ersten Schenkeln der beiden ihm zugehörigen Abschirmelemente festgelegt sein. Die Abschirmelemente oder/und die Verbinder besitzen in diesem Fall einzelne Öffnungen, welche derart angeordnet und ausgebildet sind, dass bei einer maximalen Annäherung der ersten Schenkel der Abschirmelemente zueinander ein Überstand jedes Befestigungsmittels zumindest teilweise in einer der Öffnungen aufnehmbar ist. Mit anderen Worten wird ein möglichst kompaktes Zusammendrückmaß der Schutzabdeckung dadurch erreicht, dass die zur Festlegung der Verbinder an den Abschirmelementen dienenden Befestigungsmittel keine unnötige Beabstandung im Zustand der maximalen Annäherung der ersten Schenkel der Abschirmelemente verursachen können. Die an die Befestigungsmittel angepassten Öffnungen in den Abschirmelementen oder/und den Verbindern selbst dienen dabei quasi als Vertiefungen, in denen der jeweilige Überstand eines Befestigungsmittels zumindest temporär aufnehmbar ist. Aufgrund der hierfür nur geringen Größe dieser Öffnungen erhalten die so ausgestatteten Teile der Schutzabdeckung keine nennenswerte Schwächung, so dass dessen Stabilität insgesamt erhalten bleibt.

Bei den Befestigungsmitteln kann es sich beispielsweise um lösbare Befestigungsmittel wie etwa Schrauben, Nieten oder Klammern handeln. Denkbar sind auch stoffschlüssige Befestigungsmittel oder Kombinationen aus dem Genannten.

Gemäß einer besonders bevorzugten Weiterbildung des grundsätzlichen Erfindungsgedankens kann jeder der Verbinder einen Mittelsteg mit vier schwenkbar an dem Mittelsteg angeordneten Armen besitzen. Die in Längsrichtung des Mittelstegs nebeneinander gelegenen Arme lassen sich dabei in einer Weise durchnummerieren, dass einer der außenliegenden Arme als der erste Arm bezeichnet werden kann, während der in Längsrichtung des Mittelstegs folgende Arm der zweite Arm ist. Hieran anschließend befindet sich der dritte Arm, während der vierte und letzte Arm am dem ersten Arm gegenüberliegenden anderen Endbereich des Mittelstegs gelegen ist. Von diesen Armen sind der erste Arm und der dritte Arm jeweils über ihren freien Fußabschnitt mit demselben Abschirmelement verbunden, während der zwischen dem ersten Arm und dem dritten Arm gelegene zweite Arm sowie der vierte Arm jeweils über ihren freien Fußabschnitt mit demselben, zu dem vorgenannten Abschirmelement unmittelbar benachbarten Abschirmelement verbunden sind. Insbesondere bei zueinander beabstandeten ersten Schenkeln der so miteinander verketteten Abschirmelemente ergibt sich eine abwechselnde Ausrichtung der Arme, indem - ausgehend vom Mittelsteg - der erste und dritte Arm zu einem der beiden Abschirmelemente weisen, während der zweite und vierte Arm zu dem anderen Abschirmelement hin ausgerichtet sind.

Der besondere Vorteil ergibt sich hier aus der Tatsache, dass die Arme bei zunehmender Annäherung der ersten Schenkel der mit ihnen verbundenen Abschirmelemente nicht aufeinander zum Liegen kommen, sondern in einer gemeinsamen Ebene nebeneinander anordenbar sind. Hieraus ergibt sich eine überaus flach bauende Ausgestaltung für die einzelnen Verbinder, woraus sich rein baulich ein entsprechend kleines Zusammendrückmaß für die Schutzabdeckung ergibt.

Die Erfindung sieht vor, dass jeder dieser Verbinder aus einem plattenförmigen Grundkörper gebildet sein kann. Der jeweilige Grundkörper ist dann unter Ausbildung der Arme durch Materialausschnitte in einzelne Bereiche aufgetrennt. Die Materialausschnitte können zumindest teilweise bis an den Rand des jeweiligen Grundkörpers der einzelnen Verbinder reichen, so dass diese zum Rand hin offen sind und so ein vollständiges "Freischneiden" des jeweiligen Bereichs bewirken.

In vorteilhafter Weise können die Arme jedes Verbinders über Filmscharniere an dem zugehörigen Mittelsteg angelenkt sein.

Dies ermöglicht eine überaus einfache und wirtschaftliche Herstellungsweise, da so jedem Verbinder ein einzelner materialeinheitlich einstückiger Grundkörper zugrunde liegen kann, die jeweils durch die Anordnung oder Ausbildung von Filmscharnieren die notwendige Gelenkigkeit ihrer Arme erhalten.

Bevorzugt können die freien Endabschnitte der Arme jedes Verbinders im Sinne von Fußabschnitten jeweils über Filmscharniere gegenüber dem zugehörigen Arm schwenkbar gestaltet sein. Durch die Anordnung oder Ausbildung der Filmscharniere ergibt sich insgesamt ein kontrolliertes Verhalten für die einzelnen Scharniere während der möglichen Längenänderung der Schutzabdeckung. Je nach deren Ausgestaltung können diese einen nur geringen oder entsprechend höheren Widerstand gegenüber Schwenkbewegungen aufweisen, um beispielsweise das Bewegungsverhalten der einzelnen Abschirmelemente untereinander einzustellen.

Im Rahmen der Erfindung wird es als vorteilhaft angesehen, wenn die Abschirmelemente jeweils eine oder mehrere Öffnungen besitzen. Die Öffnungen können beispielsweise kreisrund ausgestaltet sein. Diese können etwa durch einfaches Stanzen oder/und Bohren in den Abschirmelementen angeordnet sein. Wenigstens einer der freien Fußabschnitte der Arme kann dabei über mindestens ein sich zumindest teilweise durch eine dieser Öffnungen hindurch erstreckendes Befestigungsmittel mit dem zugehörigen Abschirmelement verbunden sein. Alternativ oder ergänzend hierzu kann wenigstens einer der freien Fußabschnitte der Arme auf diese Weise mit dem Fußabschnitt des Arms eines benachbarten Verbinders verbunden sein. Hierbei kann das Befestigungsmittel beispielsweise aus einer stoffschlüssigen Verbindung bestehen, wie etwa einer Schweißung oder einer Klebung.

Bevorzugt kann jedes der Abschirmelemente jeweils vier im Bereich eines Verbinders gelegene Öffnungen besitzen. Von diesen Öffnungen sind dann zwei durch jeweils ein Befestigungsmittel verdeckt, welches einen der Arme eines Verbinders an dem zugehörigen Abschirmelement festlegt. Die zwei verbleibenden freien Öffnungen sind dabei so angeordnet, dass ein Überstand jener, die anderen zwei Arme des Verbinders an einem unmittelbar benachbarten Abschirmelement festlegenden Befestigungsmittel zumindest bei maximaler Annäherung der ersten Schenkel dieser Abschirmelemente zumindest teilweise in jeweils einer der freien Öffnungen des jeweils anderen Abschirmelements anordenbar ist.

Mit Blick auf die möglichst wirtschaftliche Herstellungsweise ist vorgesehen, dass alle Verbinder baugleich ausgestaltet sein können. Diese ermöglicht deren Serienfertigung mit entsprechend niedrigen Stückkosten. Die beiden jeweils zwei Abschirmelemente mit einem unmittelbar zwischen diesen gelegenen Abschirmelement koppelnden Verbinder können dabei so um 180° in Bezug auf eine Längenänderungsrichtung der Schutzabdeckung gegeneinander verdreht angeordnet sein, dass - insbesondere mit Bezug auf die zweite Ausführungsform der Schutzabdeckung - der erste Arm des einen Verbinders und der zweite Arm des anderen Verbinders durch ein gemeinsames Befestigungsmittel an demselben zwischen den beiden anderen Abschirmelementen gelegenen Abschirmelement festgelegt sind. Insbesondere mit Bezug auf die dritte Ausführungsform der Schutzabdeckung - die jeweils vier Arme aufweisenden Verbinder betreffend - können entsprechend der erste Arm des einen Verbinders und der vierte Arm des anderen Verbinders jeweils durch ein gemeinsames Befestigungsmittel an demselben zwischen den beiden anderen Abschirmelementen gelegenen Abschirmelement festgelegt sein. Gleichzeitig können dann der dritte Arm des einen Verbinders und der zweite Arm des anderen Verbinders jeweils durch ein anderes gemeinsames Befestigungsmittel an dem zwischen den beiden anderen Abschirmelementen gelegenen Abschirmelement festgelegt sein.

Durch diese Anordnung und insbesondere die um 180° gegeneinander verdrehte Ausrichtung der sich an dem jeweils einem Abschirmelement gegenüberliegend angeordneten Verbindern ist es möglich, dass die in diesem Abschirmelement eingebrachten Öffnungen im Sinne von Durchgangsöffnungen quasi zu beiden Seiten des Abschirmelements hin offen sind, um die Überstände zweier Verbindungsmittel gleichzeitig oder nacheinander aufnehmen zu können.

Um eine möglichst stabile und haltbare Verkettung der Abschirmelemente zu erhalten, wird es als vorteilhaft angesehen, wenn die einzelnen Verbinder jeweils paarweise in derselben Ausrichtung zwischen den ersten Schenkeln zweier unmittelbar zueinander benachbarter Abschirmelemente angeordnet sind. In vorteilhafter Weise können die paarweise angeordneten Verbinder die gleiche Ausrichtung aufweisen, um ein identisches "Knickverhalten" während der relativen Bewegungen der über diese miteinander verbundenen Abschirmelemente zu erhalten. Dies meint, dass bei einer Veränderung der jeweils zwischen zwei Armen eingeschlossenen Winkel die Mittelstege der paarweise angeordneten Verbinder stets zur gleichen Seite hin verlagert werden. Je nach Breite der ersten Schenkel der jeweiligen Abschirmelemente kann es von Vorteil sein, wenn sich die Mittelstege der Verbinder dabei von den zugehörigen zweiten Schenkeln der Abschirmelemente weg bewegen, um insbesondere bei schmalen ersten Schenkeln und kleiner werdenden Winkeln zwischen den jeweiligen Armen der Verbinder nicht mit den zweiten Schenkeln zu kollidieren.

Jeweils zwischen zwei die unmittelbar zueinander benachbarte Abschirmelemente miteinander verkettenden Verbindern oder Paaren von Verbindern können zwei weitere Verbinder angeordnet sein. In Bezug auf eine Längenänderungsrichtung der Schutzabdeckung können diese dabei so entgegengesetzt zueinander um 90° gegenüber den anderen Verbindern verdreht sein, dass ein Abstand ihrer einander zugewandten Mittelstege sich bei einer Annäherung der ersten Schenkel der mit diesen Verbindern gekoppelten Abschirmelemente verkleinert wird. Hierdurch können diese Verbinder nah an den anderen Verbindern oder Paaren von Verbindern angeordnet sein, da deren "Knickverhalten" ihren jeweiligen Mittelsteg von diesen Verbindern weg verlagert, so dass keinerlei Kollisionen zu erwarten sind. Gleichzeitig müssen die sich so gegenüberstehenden Verbinder einen geeigneten Abstand zueinander aufweisen, um eine Kollision ihrer bei einer Annäherung der ersten Schenkel sich aufeinander zu bewegenden Mittelstege zu vermeiden.

Selbstverständlich können die beiden in Rede stehenden Verbinder gegenüber der zuvor beschriebenen Anordnung auch so zueinander ausgerichtet sein, dass deren Mittelstege voneinander abgewandt sind. Eine Annäherung der über diese miteinander verbundenen ersten Schenkel zweier Abschirmelemente bewirkt, dass sich deren Mittelstege voneinander weg bewegen und der Abstand zwischen diesen entsprechend vergrößert wird. Gleichzeitig bewegen sich besagte Mittelstege dann jeweils auf den unmittelbar nebenstehenden Verbinder zu, so dass ein geeigneter Abstand zu diesen eingehalten werden muss, um eine Kollision mit diesen zu vermeiden.

Grundsätzlich sieht die Erfindung vor, dass die Abschirmelemente der Schutzabdeckung aus einem Metall gebildet sein können. Alternativ oder ergänzend hierzu können die Verbinder aus einem der nachfolgend genannten Kunststoffe gebildet sein oder einen solchen aufweisen:
- Polyamid,
- Polypropylen,
- Polypropylen-Copolymer
- Polyethylen.

Insbesondere durch eine entsprechende Wahl des Kunststoffes für die Verbinder lässt sich deren Haltbarkeit gegenüber einer Ausführung aus Metall mitunter deutlich erhöhen. Zudem kann die Hysterese des Kunststoffes eine wirksame Dämpfung des aus den Verbindern gebildeten Federsystems bewirken, was sich in der praktischen Anwendung als vorteilhaft auf das Laufverhalten der Schutzabdeckung auswirken kann.

Die nunmehr vorgestellte erfindungsgemäße Schutzabdeckung ermöglicht ein überaus kompaktes Zusammendrückmaß bei gleichzeitig wirtschaftlicher Herstellungsweise. Die an sich einfache und bevorzugt identische Ausgestaltung der einzelnen Verbinder lässt geringe Stückkosten zu. Die Anbindung der Verbinder an die Abschirmelemente durch einfache Verbindungsmittel unterstützt die insgesamt einfache und schnelle Fertigung einer solchen Schutzabdeckung. Aufgrund der vorbeschriebenen Ausgestaltungen lässt sich ein Zusammendrückmaß für die Schutzabdeckung erreichen, welches beispielsweise unter der Summe der Materialdicken der ersten Schenkel der einzelnen Abschirmelemente zuzüglich der 2,5-fachen Menge der Materialdicke der einzelnen Verbinder liegen kann. Die Materialdicke der Grundkörper der Verbinder kann beispielsweise 1,0mm ± 0,5mm betragen. Zusätzlich oder alternativ zur Verwendung von Verbindungsmitteln in Form von zusätzlichen Bauteilen, wie etwa Schrauben oder/und Nieten, können die einzelnen Verbinder auch durch die Öffnungen in den ersten Schenkeln der Abschirmelemente hindurch stoffschlüssig miteinander verbunden sein. Dies kann beispielsweise durch Schweißen oder/und Kleben erfolgen, wobei diese Verbindungsformen als Verbindungsmittel im Sinne der Erfindung gelten. Denkbar ist auch eine Festlegung der Verbinder durch angeschweißte Blechscheiben, die dann ebenfalls als Verbindungsmittel im Sinne der Erfindung gelten.

Weitere Ausgestaltungen der Erfindung ergeben sich im Zusammenhang mit einigen schematisch dargestellten und nachfolgend näher beschriebenen Ausführungsbeispielen der Erfindung. Es zeigen:
- Fig. 1: eine erfindungsgemäße Schutzabdeckung in einer perspektivischen Darstellungsweise,
- Fig. 2: ein einzelner Verbinder der Schutzabdeckung aus Fig. 1 in perspektivischer Darstellungsweise,
- Fig. 3: die Schutzabdeckung aus Fig. 1 in eine leicht veränderten Perspektive in ansonsten gleicher Darstellungsweise,
- Fig. 4: eine erste Variante der Schutzabdeckung aus Fig. 1 und Fig. 3 in ansonsten gleicher Darstellungsweise,
- Fig. 5: ein einzelner Verbinder der Schutzabdeckung aus Fig. 4 in perspektivischer Darstellungsweise,
- Fig. 6: eine zweite Variante der Schutzabdeckung aus Fig. 1 und Fig. 3 in ansonsten gleicher Darstellungsweise
- Fig. 7: ein einzelner Verbinder der Schutzabdeckung aus Fig. 6 in perspektivischer Darstellungsweise sowie
- Fig. 8: eine alternative Ausgestaltung des einzelnen Verbinders aus Fig. 2 in derselben Darstellungsweise.

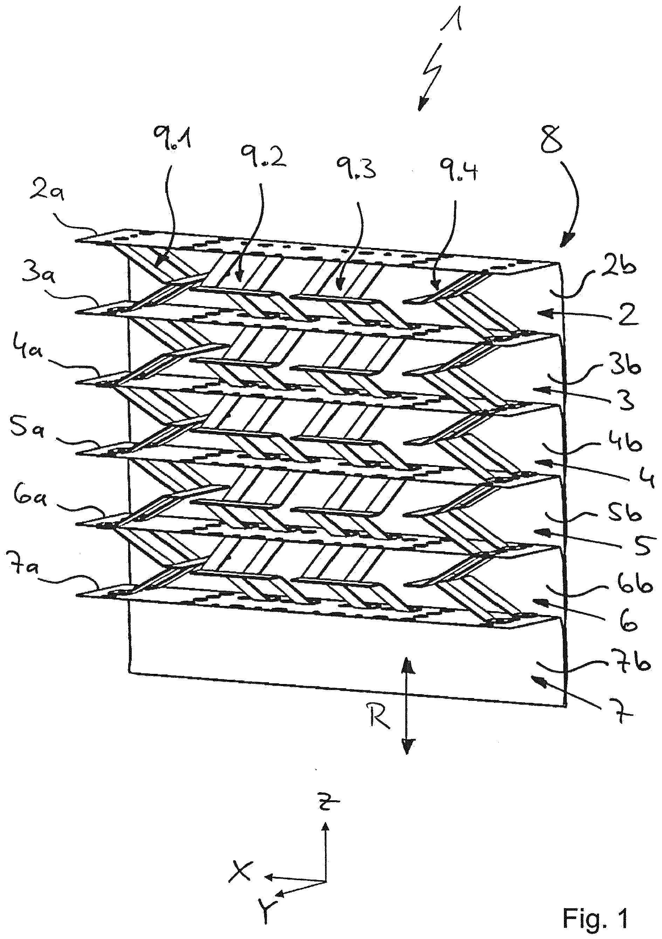

Fig. 1 zeigt eine oder einen Ausschnitt aus einer erfindungsgemäßen Schutzabdeckung 1 in einer perspektivischen Darstellungsweise. Diese kann in nicht näher gezeigter Weise breiter oder/und höher ausgestaltet sein. Die Schutzabdeckung 1 umfasst eine Vielzahl an sich parallel zu einer Längsrichtung X erstreckenden Abschirmelementen 2 - 7. Diese weisen jeweils einen L-förmigen Querschnitt auf, so dass jedes dieser Abschirmelemente 2 - 7 einen ersten Schenkel 2a - 7a und einen gegenüber dem ersten Schenkel 2a - 7a abgewinkelten zweiten Schenkel 2b - 7b besitzt. Dabei liegen die Deckflächen der ersten Schenkel 2a - 7a der Abschirmelemente 2 - 7 so einander gegenüber, dass sich deren zweite Schenkel 2b - 7b zumindest teilweise unter Ausbildung einer in eine Längenänderungsrichtung R der Schutzabdeckung 1 längenveränderlichen Abschirmfläche 8 überdecken. Die Breite der ersten Schenkel 2a - 7a erstreckt sich dabei jeweils parallel zu einer Querrichtung Y, während sich die Breite der zweiten Schenkel 2b - 7b jeweils parallel zu einer Hochrichtung Z erstreckt. Die ersten Schenkel 2a - 7a der Abschirmelemente 2 - 7 sind über Verbinder 9.1 - 9.4 relativ zueinander beweglich miteinander verkettet, welche hierzu mit den ersten Schenkeln 2a, 3a; 3a, 4a; 4a, 5a; 5a, 6a; 6a, 7a der unmittelbar zueinander benachbarten Abschirmelemente 2 - 7 verbunden sind.

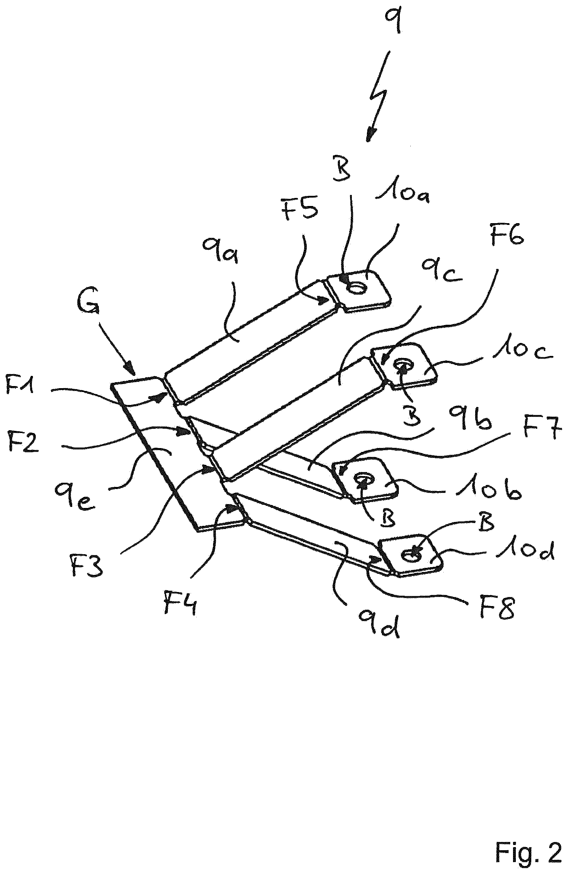

Fig. 2 zeigt beispielhaft einen Verbinder 9 der baugleichen Verbinder 9.1 - 9.4 aus Fig. 1 in einer von der übrigen Schutzabdeckung 1 isolierten perspektivischen Darstellungsweise. Wie zu erkennen, weist der hier stellvertretend für alle anderen Verbinder 9.1 - 9.4 ersichtliche Verbinder 9 insgesamt vier Arme 9a - 9d auf, welche jeweils schwenkbar an einem Mittelsteg 9e des Verbinders 9 angeordnet sind. Der Verbinder 9 ist aus einem plattenförmigen Grundkörper G gebildet, welcher unter Ausbildung der Arme 9a - 9d durch Materialausschnitte in einzelne Bereiche aufgetrennt ist. Dabei kann wenigstens einer der Arme 9a - 9d entlang einer Biegelinie schwenkbar an dem zugehörigen Mittelsteg 9e angelenkt sein. Besagte Biegelinie kann unter Ausbildung eines Filmscharniers F1 - F4 in das Material des Verbinders 9 hinein geprägt sein. Alternativ oder ergänzend hierzu kann wenigstens einer der Arme 9a - 9d über eine anderweitig schwenkbar ausgebildete Biegelinie an dem zugehörigen Mittelsteg 9e angelenkt sein, wie beispielsweise durch einen entsprechenden Materialabtrag oder einen mit Aufschmelzen und/oder Abfräsen einhergehenden Pressvorgang. Dem Mittelsteg 9e gegenüberliegende freie Fußabschnitte 10a-10d der Arme 9a - 9d sind entlang einer Biegelinie gegenüber dem zugehörigen Arm 9a - 9d schwenkbar an diesem angeordnet. Bei den Biegelinien kann es sich um Filmscharniere F5 - F8 handeln. In den Fußabschnitten 10a - 10d angeordnete Öffnungen B ermöglichen deren Festlegung an den zugehörigen ersten Schenkeln 2a - 7a über hier nicht ersichtliche Befestigungsmittel.

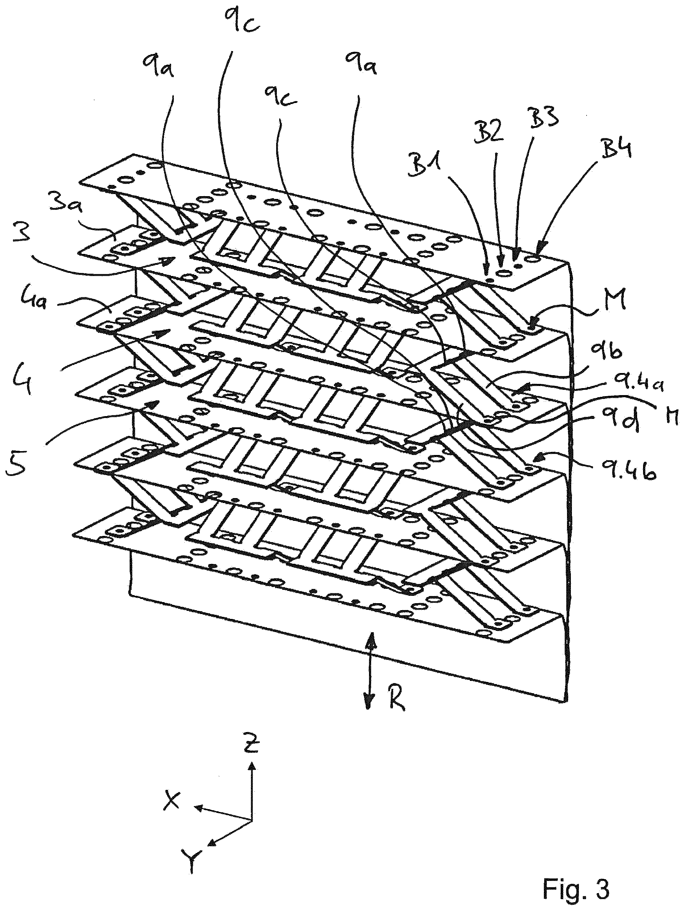

Fig. 3 zeigt die Schutzabdeckung 1 aus Fig. 1 in einer leicht veränderten Perspektive ihrer weiterhin perspektivischen Darstellungsweise. In dieser wird die Anordnung der einzelnen Verbinder 9.1 - 9.2 zwischen jeweils zwei ersten Schenkeln 2a - 9a zweier unmittelbar zueinander benachbarter Abschirmelemente 2 - 7 deutlicher. Weiterhin gut zu erkennen ist, dass in den ersten Schenkeln 2a-7a der einzelnen Abschirmelemente 2 - 7 jeweils vier in einer Reihe nebeneinander gelegene Öffnungen B1 - B4 angeordnet sind. Vorliegend sind die Öffnungen B1 - B4 rein beispielhaft kreisrund und jeweils als Durchgangsöffnung ausgeführt. Wie bereits zuvor angesprochen, sind die Fußabschnitte 10a - 10d jedes Verbinders 9.1 - 9.4 über jeweils ein Verbindungsmittel M mit dem ersten Schenkel 2a - 7a der zugehörigen Abschirmelemente 2 - 7 verbunden. In der konkreten Ausgestaltung sind hierbei beispielsweise die Fußabschnitte 10b, 10d des zweiten Arms 9b und des vierten Arms 9d mit dem ersten Schenkel 4a des zugehörigen Abschirmelements 4 verbunden, während die hier aufgrund der Perspektive verdeckten und insofern nicht erkennbaren Fußabschnitte 10a, 10c der übrigen zwei Arme 9a, 9c mit dem ersten Schenkel 3a eines unmittelbar gegenüberliegenden Abschirmelements 3 verbunden sind. Hierzu ist jeweils ein Verbindungsmittel M beispielsweise durch die Öffnungen B in den Fußabschnitten 10b, 10d des zweiten Arms 9b und des vierten Arms 9d sowie die zugehörigen Öffnungen B1, B3 in dem ersten Schenkel 4a des dritten Abschirmelements 4 hindurch angeordnet. Demgegenüber ist jeweils ein Verbindungsmittel M durch die Öffnungen B in den Fußabschnitten 10a, 10c des ersten Arms 9a und des dritten Arms 9c sowie die zugehörigen Öffnungen B2, B4 in dem ersten Schenkel 3a des zweiten Abschirmelements 3 hindurch angeordnet. Die Verbindungsmittel M verdecken die jeweiligen Öffnungen B1 - B4. Die jeweils freien Öffnungen B1 - B4 in den ersten Schenkeln 2a - 7a der Abschirmelemente 2 - 7 dienen bei einer maximalen Annäherung der ersten Schenkel 2a - 7a dazu, einen Überstand der Befestigungsmittel M der sich an diese Öffnungen B1 - B4 annähernden Fußabschnitte 10a - 10d zumindest teilweise aufzunehmen.

Mit dem beispielhaften Blick auf das zwischen dem zweiten Abschirmelement 3 und dem vierten Abschirmelement 5 gelegene dritte Abschirmelement 4 wird in nicht näher dargestellter Weise deutlich, dass die in Bezug auf die Hochrichtung Z übereinanderliegenden und dabei das dritte Abschirmelement 4 mit dem zweiten Abschirmelement 3 sowie mit dem vierten Abschirmelement 5 koppelnden Verbinder 9.4a, 9.4b so um 180° in Bezug auf die Längenänderungsrichtung R der Schutzabdeckung 1 gegeneinander verdreht angeordnet sein können, dass der erste Arm 9a des einen Verbinders 9.4b und der vierte Arm 9d des anderen Verbinders 9.4a durch ein gemeinsames Befestigungsmittel M sowie der dritte Arm 9c des einen Verbinders 9.4b und der zweite Arm 9b des anderen Verbinders 9.4a durch ein anderes gemeinsames Befestigungsmittel M an demselben zwischen den beiden anderen Abschirmelementen 3, 5 gelegenen dritten Abschirmelement 4 festgelegt sind. Die Verbinder 9.1 - 9.4 können dabei in hier nicht näher gezeigter Weise jeweils paarweise in derselben Ausrichtung zwischen den ersten Schenkeln 2a - 7a zweier unmittelbar zueinander benachbarter Abschirmelemente 2 - 7 angeordnet sein.

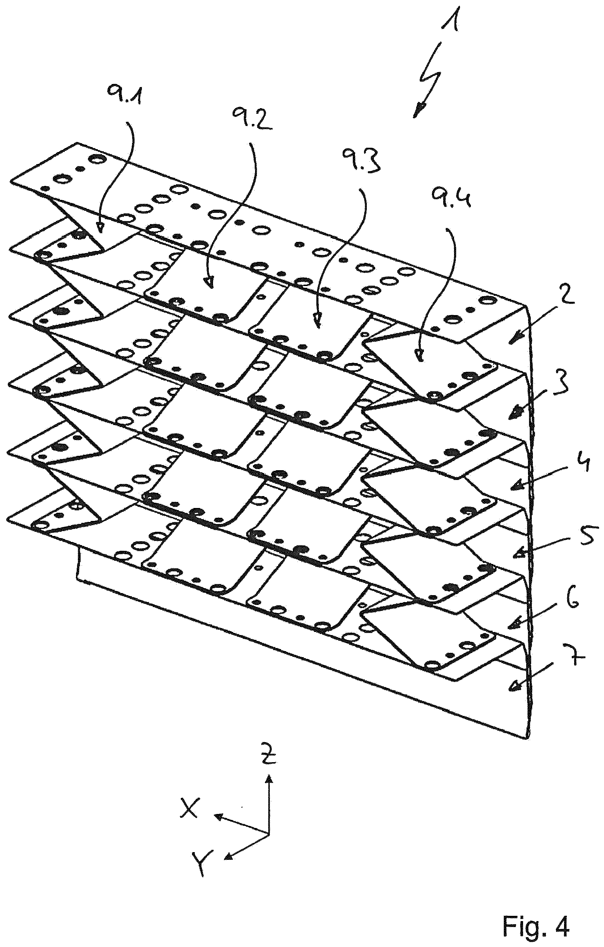

Alternativ hierzu können die Verbinder 9.1 - 9.4 selbstverständlich auch wie in Fig. 1 und Fig. 4 explizit gezeigt angeordnet sein, so dass in Bezug auf die Hochrichtung Z übereinanderliegende Verbinder 9.1 - 9.4 dann dieselbe Ausrichtung und insofern keine wie zuvor als Ausgestaltungsmöglichkeit beschriebene gegenseitige Verdrehung um 180° aufweisen. Um auch hierbei die Vorteile der zumindest teilweisen Aufnahme eines Überstands der jeweils zwei Arme 9a - 9d gemeinsam an einem ersten Schenkel 3a - 7a der Abschirmelemente 1 - 7 festlegenden Befestigungsmittel M innerhalb der freien Öffnungen B1 - B4 realisieren zu können, sind die Arme 9a - 9d der an sich gleich ausgerichteten Verbinder 9.1 - 9.4 dann entsprechend unterschiedlich abgewinkelt. Wie in Fig. 3 hierzu am besten ersichtlich meint dies am Beispiel der beiden übereinanderliegenden Verbinder 9.4a, 9.4b konkret, dass der erste erste Arm 9a und der dritte Arm 9c des einen Verbinders 9.4a in Bezug auf die Hochrichtung Z gegenüber dem Mittelsteg 9e nach oben - also zum ersten Schenkel 3a des zweiten Abschirmelements 3 hin - abgewinkelt sind, während der zweite Arm 9b und der vierte Arm 9d desselben Verbinders 9.4b gegenüber dem Mittelsteg 9e nach unten - also zum ersten Schenkel 4a des dritten Abschirmelements 4 hin - und insofern entgegengesetzt abgewinkelt sind. Demgegenüber erstrecken sich die Arme 9a - 9d des zu diesem Verbinder 9.4a gleich ausgerichteten Verbinders 9.4b so, dass dessen erster Arm 9a und dessen dritter Arm 9c in Bezug auf die Hochrichtung Z gegenüber dem Mittelsteg 9e nach unten - also zum ersten Schenkel 5a des vierten Abschirmelements 5 hin - abgewinkelt sind, während dessen zweiter Arm 9b und dessen vierter Arm 9d gegenüber dem Mittelsteg 9e nach oben - also zum ersten Schenkel 4a des dritten Abschirmelements 4 hin - und insofern entgegengesetzt abgewinkelt sind. Mit anderen Worten sind so die in jeweils einer der parallel zur Auszugsrichtung R verlaufenden Ebenen gemeinsam gelegenen Arme 9a - 9d zweier in Bezug auf die Hochrichtung Z unmittelbar benachbarter Verbinder 9.4a, 9.4b zumindest außerhalb des vollständig gestauchten Zustands der Schutzabdeckung 1 jeweils entgegengesetzt zueinander abgewinkelt. Anders ausgedrückt bewegen sich die Arme 9a - 9d der in Bezug auf die Auszugsrichtung R unmittelbar benachbarten Verbinder 9.1 - 9.4 während einer Längenänderung der Schutzabdeckung 1 jeweils spiegelverkehrt zueinander. Hierzu sind beispielsweise der erste Arm 9a des einen Verbinders 9.4a und der erste Arm 9a des in Bezug auf die Hochrichtung Z unmittelbar über diesem gelegenen Verbinders 9.4 über ein gemeinsames Befestigungsmittel M an dem ersten Schenkel 3a des zweiten Abschirmelements 3 festgelegt, während der zweite Arm 9b des erstgenannten Verbinders 9.4a mit dem zweiten Arm 9b des in Bezug auf die Hochrichtung Z unmittelbar unter diesem gelegenen Verbinders 9.4b über ein gemeinsames Befestigungsmittel M an dem ersten Schenkel 4a des dritten Abschirmelements 4 festgelegt sind. Weiterhin sind in diesem Beispiel dann der dritte Arm 9c des einen Verbinders 9.4a und der dritte Arm 9c des in Bezug auf die Hochrichtung Z unmittelbar über diesem gelegenen Verbinders 9.4 über ein gemeinsames Befestigungsmittel M an dem ersten Schenkel 3a des zweiten Abschirmelements 3 festgelegt, während der vierte Arm 9d des erstgenannten Verbinders 9.4a mit dem vierten Arm 9d des in Bezug auf die Hochrichtung Z unmittelbar unter diesem gelegenen Verbinders 9.4b über ein gemeinsames Befestigungsmittel M an dem ersten Schenkel 4a des dritten Abschirmelements 4 festgelegt sind.

Fig. 4 ist eine erste Variante der Schutzabdeckung aus Fig. 1 und Fig. 3 zu entnehmen. Während deren Abschirmelemente 2 - 7 analog der vorherigen Version ausgebildet sind, unterscheidet sich die hier gezeigte Schutzabdeckung 1 in der Ausgestaltung der Verbinder 9.1 - 9.4.

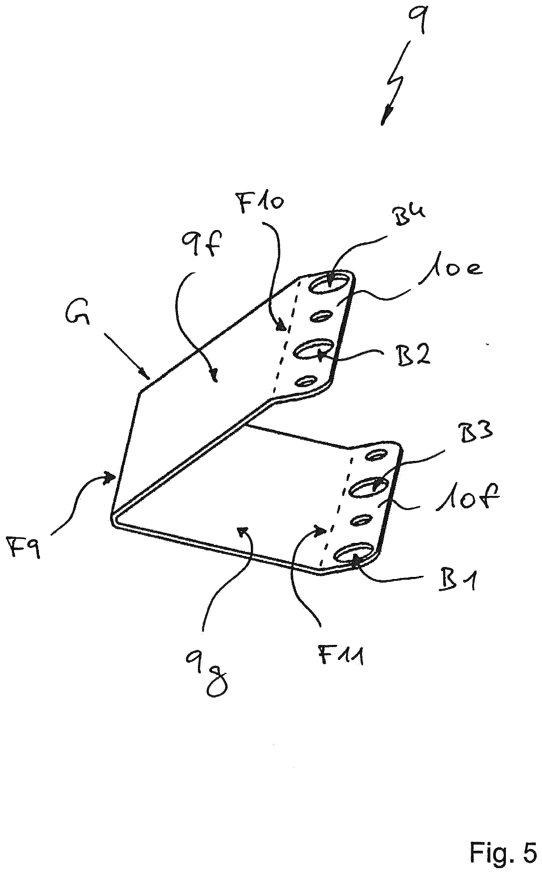

Fig. 5 verdeutlicht den Aufbau der hier eingesetzten Verbinder 9.1 - 9.4 anhand eines einzelnen von der restlichen Schutzabdeckung 1 isolierten Verbinders 9. Wie zu erkennen, ist dieser zwar ebenfalls aus einem plattenförmigen Grundkörper G gebildet, allerdings besitzt dieser nunmehr zwei entlang einer Biegelinie gelenkig miteinander verbundene Wandabschnitte 9f, 9g, an deren freien Enden jeweils ein Fußabschnitt 10e, 10f entlang einer Biegelinie angelenkt ist. Die zwischen den Wandabschnitten 9f, 9g gelegene Biegelinie kann durch ein, bevorzugt geprägtes, Filmscharnier F9 gebildet sein, während es sich bei den Biegelinien im Bereich der Fußabschnitte 10e, 10f ebenfalls jeweils um ein Filmscharnier F10, F11 handeln kann. Zumindest das die beiden Wandabschnitte 9f, 9g gelenkig miteinander verbindende Filmscharnier F9 kann dabei durch eine Querschnittskomprimierung oder/und einen begrenzten Materialabtrag ausgebildet sein. Erkennbar sind die zur zumindest teilweisen Aufnahme eines Überstands der Verbindungsmittel M ausgebildeten Öffnungen B1 - B4 vorliegend nunmehr in den Fußabschnitten 10e, 10f der beiden Wandabschnitte 9f, 9g angeordnet.

Ersichtlich sind die Öffnungen B1 - B4 so angeordnet, dass sich im zusammengeklappten Zustand des Verbinders 9 jeweils eine dieser großen Öffnungen B1 - B4 mit einer demgegenüber kleineren Öffnung überdeckt. Dabei dienen die kleineren Öffnungen jeweils der Aufnahme eines hier nicht ersichtlichen Verbindungsmittels M, während die dem jeweiligen Verbindungsmittel M somit gegenüberliegende große Öffnung B1 - B4 bei einer maximalen Annäherung der beiden Wandabschnitte 9f, 9g der zumindest teilweisen Aufnahme eines Überstandes des Verbindungsmittels M dient. Um besagte Aufnahme der Verbindungsmittel M auch über die einzelnen Abschirmelemente 2 - 7 hinweg zu gewährleisten, ist in Fig. 4 ersichtlich, dass das Muster der kleinen Öffnungen und der großen Öffnungen B1 - B4 der in Bezug auf die Hochrichtung Z jeweils übereinander angeordneten Verbinder 9.1 - 9.4 deckungsgleich ist. Dies meint, dass sich die Muster zweier jeweils einen ersten Schenkel 2a - 7a der Abschirmelemente 2 - 7 zwischen sich einschließenden Verbinder 9.1 - 9.4 derart im Bereich des zugehörigen ersten Schenkels 2a - 7a entsprechen, dass sich die Befestigungsmittel M jeweils durch die kleine Öffnung der jeweils einen ersten Schenkels 2a - 7a zwischen sich einschließenden Verbinder 9.1 - 9.4 erstrecken. Um dies zu erreichen, sind die Wandabschnitte 9f, 9g der in Fig. 4 in Bezug auf die Hochrichtung Z übereinander angeordneten und an sich baugleichen Verbinder 9.1 - 9.4 entsprechend entgegengesetzt zueinander abgebogen und zusätzlich um 180° in Bezug auf die Hochrichtung Z verdreht angeordnet. Auf diese Weise können die Befestigungsmittel M bei einer maximalen Annäherung der Wandabschnitte 9f, 9g jedes Verbinders 9.1 - 9.4 zumindest teilweise in den großen Öffnungen B1 - B4 aufgenommen werden, so dass sich ein kompaktes Zusammendrückmaß ergibt.

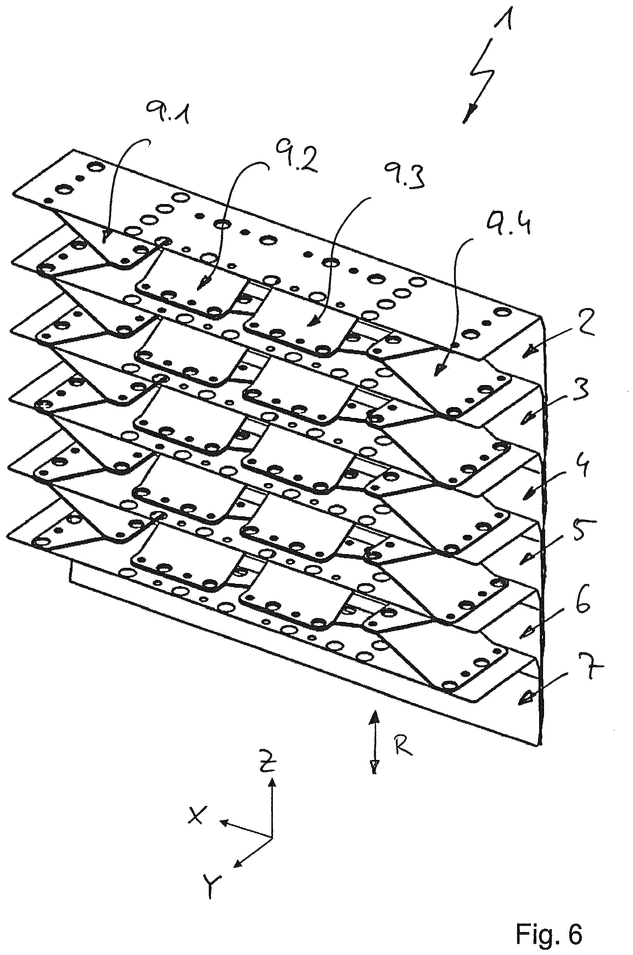

Fig. 6 ist eine weitere Variante der Schutzabdeckung 1 aus Fig. 1 und Fig. 3 zu entnehmen. Während deren Abschirmelemente 2 - 7 auch hier analog der ursprünglichen Version ausgebildet sind, unterscheidet sich die hier gezeigte Schutzabdeckung 1 ebenfalls nur in der Ausgestaltung der Verbinder 9.1 - 9.4.

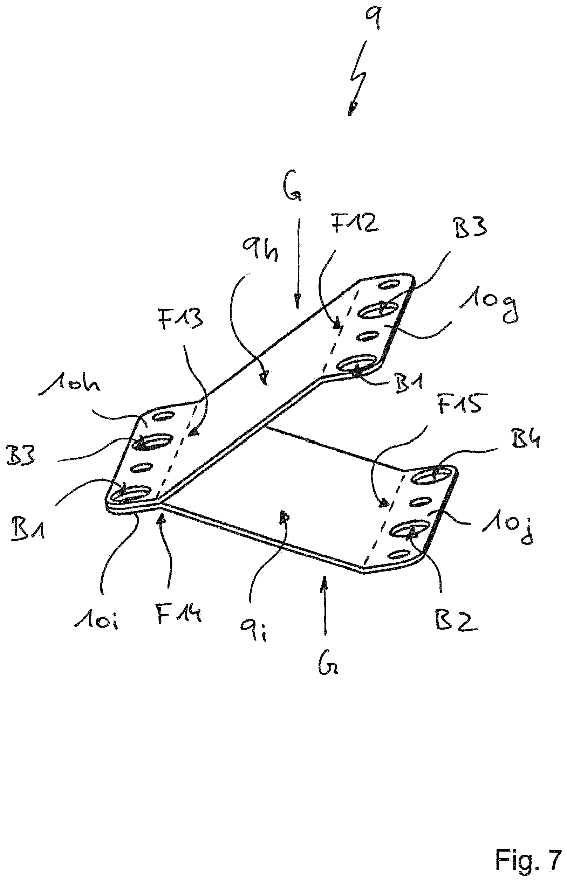

Fig. 7 verdeutlicht den Aufbau der hier eingesetzten Verbinder 9.1 - 9.4 anhand eines einzelnen von der restlichen Schutzabdeckung 1 isolierten Verbinders 9. Wie zu erkennen, ist dieser nunmehr aus zwei plattenförmigen Grundkörpern G gebildet, welche jeweils einen Wandabschnitt 9h, 9i aufweisen. An den freien Enden jedes dieser Wandabschnitte 9h, 9i ist jeweils ein Fußabschnitt 10g, 10h; 10i, 10j entlang einer Biegelinie angelenkt, bei denen es sich jeweils um ein Filmscharnier F12 - 15 handeln kann. Wesentlich hierbei ist, dass diese beiden Grundkörper G ersichtlich über jeweils einen ihrer Fußabschnitte 10h, 10i miteinander verbunden sind. Erkennbar sind auch hier die zur zumindest teilweisen Aufnahme eines Überstands der Verbindungsmittel M ausgebildeten Öffnungen B1 - B4 in den freien Fußabschnitten 10g, 10j der beiden Grundkörper G angeordnet.

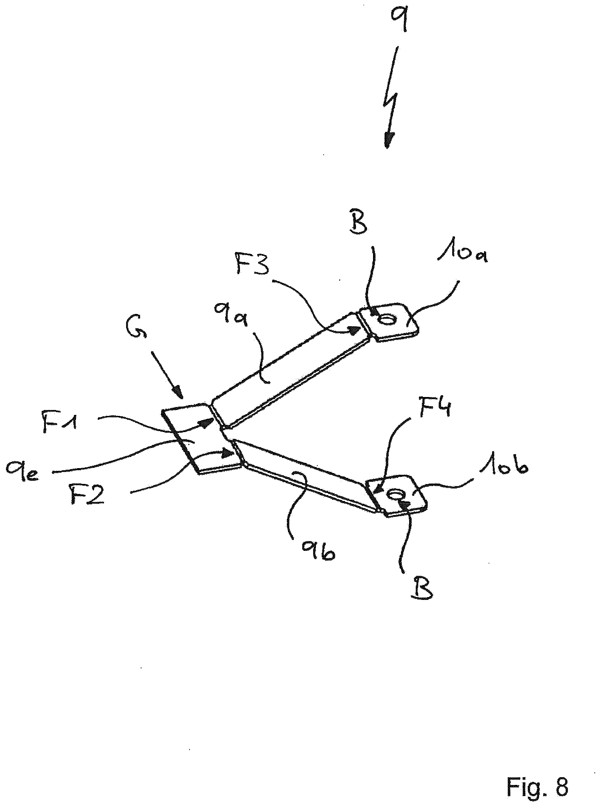

Fig. 8 zeigt eine Variante des bereits in Fig. 2 in isolierter Form ersichtlichen Verbinders 9, welche erkennbar nur zwei schwenkbar an dem Mittelsteg 9e angeordnete Arme 9a, 9b besitzt. Der hier gezeigte Verbinder 9 kann anstelle des in Fig. 2 dargestellten Verbinders 9 in der wie in Fig.1 ersichtlichen Weise zwischen den einzelnen Abschirmelementen 2 - 7 der Schutzabdeckung 1 angeordnet sein. Zur Vermeidung von Wiederholungen wird in Bezug auf dessen weitere Ausgestaltungen auf die vorhergehende Beschreibung verweisen, insbesondere zu Fig. 1 und Fig. 2.

Grundsätzlich können die Abschirmelemente 2 - 7 aus einem Metall gebildet sein. Alternativ oder ergänzend hierzu können die Verbinder 9.1 - 9.4 aus einem Kunststoff gebildet sein oder einen solchen aufweisen. Bei dem Kunststoff kann es sich beispielsweise um Polyamid, Polypropylen, Polypropylen-Copolymer oder Polyethylen handeln.

## Patentansprüche

1. Schutzabdeckung (1) für eine Maschine, umfassend eine Vielzahl an, insbesondere im Querschnitt jeweils L-förmigen, Abschirmelementen (2-7), welche jeweils einen ersten Schenkel (2a-7a) und einen gegenüber ihrem ersten Schenkel (2a-7a) abgewinkelten zweiten Schenkel (2b-7b) aufweisen, wobei die jeweils durch Verbinder (9, 9.1-9.4) relativ zueinander beweglichen miteinander verketteten ersten Schenkel (2a-7a) zweier unmittelbar zueinander benachbarter Abschirmelemente (2-7) so mit ihren jeweiligen Deckflächen einander gegenüberliegend angeordnet sind, dass deren zweiten Schenkel (2b-7b) sich zumindest teilweise unter Ausbildung einer längenveränderlichen Abschirmfläche (8) überdecken,
**dadurch gekennzeichnet,**
**dass** jeder Verbinder (9, 9.1-9.4) wenigstens eine Biegelinie aufweist, entlang welcher zumindest ein Teil des Verbinders (9, 9.1-9.4) gegenüber einem anderen Teil des Verbinders (9, 9.1-9.4) schwenkbar ist, wobei mindestens einer der Verbinder (9, 9.1-9.4) aus einem plattenförmigen Grundkörper (G) gebildet ist, welcher zwei, über eine, unter Ausbildung eines, insbesondere lückenlosen, Filmscharniers (F1-F15), in das Material des zugehörigen Verbinders (9, 9.1-9.4) hinein geprägte, Biegelinie gelenkig miteinander verbundene Wandabschnitte (9f, 9g) besitzt, an deren freien Enden jeweils ein Fußabschnitt (10e, 10f) angelenkt ist.

2. Schutzabdeckung (1), umfassend eine Vielzahl an, insbesondere im Querschnitt jeweils L-förmigen, Abschirmelementen (2-7), welche jeweils einen ersten Schenkel (2a-7a) und einen gegenüber ihrem ersten Schenkel (2a-7a) abgewinkelten zweiten Schenkel (2b-7b) aufweisen, wobei die ersten Schenkel (2a-7a) so mit ihren Deckflächen einander gegenüberliegend angeordnet sind, dass die zweiten Schenkel (2b-7b) der unmittelbar zueinander benachbarten und über ihre zugehörigen ersten Schenkel (2a-7a), durch diese relativ zueinander beweglich miteinander koppelnde Verbinder (9, 9.1-9.4), verketteten Abschirmelemente (2-7) sich zumindest teilweise unter Ausbildung einer längenveränderlichen Abschirmfläche (8) überdecken,
**dadurch gekennzeichnet,**
**dass** jeder der Verbinder (9, 9.1-9.4) einen Mittelsteg (9e) mit nur zwei schwenkbar an dem Mittelsteg (9e) angeordneten Armen (9a, 9b) besitzt, von denen einer dieser Arme (9a, 9b) über seinen freien Endabschnitt (10a, 10b) mit einem der Abschirmelemente (2-7) verbunden ist, während ein zu diesem Abschirmelement (2-7) unmittelbar benachbartes Abschirmelement (2-7) mit dem freien Endabschnitt (10a, 10b) des anderen Arms (9a, 9b) desselben Verbinders (9, 9.1-9.4) verbunden ist.

3. Schutzabdeckung (1), umfassend eine Vielzahl an, insbesondere im Querschnitt jeweils L-förmigen, Abschirmelementen (2-7), welche jeweils einen ersten Schenkel (2a-7a) und einen gegenüber ihrem ersten Schenkel (2a-7a) abgewinkelten zweiten Schenkel (2b-7b) aufweisen, wobei die ersten Schenkel (2a-7a) so mit ihren Deckflächen einander gegenüberliegend angeordnet sind, dass die zweiten Schenkel (2b-7b) der unmittelbar zueinander benachbarten und über ihre zugehörigen ersten Schenkel (2a-7a) durch diese relativ zueinander beweglich miteinander koppelnde Verbinder (9, 9.1-9.4) verketteten Abschirmelemente (2-7) sich zumindest teilweise unter Ausbildung einer längenveränderlichen Abschirmfläche (8) überdecken,
**dadurch gekennzeichnet,**
**dass** jeder der Verbinder (9, 9.1-9.4) einen Mittelsteg (9e) mit mindestens drei schwenkbar an dem Mittelsteg (9e) angeordneten Armen (9a-9d) besitzt, von denen zwei Arme (9a-9d) über ihren jeweiligen freien Endabschnitt (10a-10d) mit demselben Abschirmelement (2-7) verbunden sind, während ein zu diesem Abschirmelement (2-7) unmittelbar benachbartes Abschirmelement (2-7) mit dem freien Endabschnitt (10a-10d) des mindestens einen übrigen Arm (9a-9d) verbunden ist.

4. Schutzabdeckung (1) nach Anspruch 2 oder 3,
**dadurch gekennzeichnet,**
**dass** jeder Verbinder (9, 9.1-9.4) wenigstens eine Biegelinie aufweist, entlang welcher zumindest ein Teil des Verbinders (9, 9.1-9.4) gegenüber einem anderen Teil des Verbinders (9, 9.1-9.4) schwenkbar ist, wobei die wenigstens eine Biegelinie unter Ausbildung eines, insbesondere lückenlosen, Filmscharniers (F1-F15) in das Material des zugehörigen Verbinders (9, 9.1-9.4) hinein geprägt ist.

5. Schutzabdeckung (1) nach einem der vorhergehenden Ansprüche,
**gekennzeichnet durch**
eine Festlegung jedes Verbinders (9, 9.1-9.4) über jeweils wenigstens ein Befestigungsmittel (M) an den ersten Schenkeln (2a-7a) der beiden ihm zugehörigen Abschirmelemente (2-7), wobei die Abschirmelemente (2-7) oder/und die Verbinder (9, 9.1-9.4) einzelne Öffnungen (B, B1-B4) besitzen, welche derart angeordnet und ausgebildet sind, dass bei einer maximalen Annäherung der ersten Schenkel (2a-7a) der Abschirmelemente (2-7) zueinander ein Überstand jedes Befestigungsmittels (M) zumindest teilweise in einer der Öffnungen (B1-B4) aufnehmbar ist.

6. Schutzabdeckung (1) nach einem der Ansprüche 3 bis 5, **dadurch gekennzeichnet,**
**dass** jeder der Verbinder (9, 9.1-9.4) einen Mittelsteg (9e) mit vier schwenkbar an dem Mittelsteg (9e) angeordneten Armen (9a-9d) besitzt, von denen der erste Arm (9a) und der dritte Arm (9c) jeweils über ihren freien Fußabschnitt (10a, 10c) mit demselben Abschirmelement (2-7) verbunden sind, während der zwischen dem ersten Arm (9a) und dem dritten Arm (9c) gelegene zweite Arm (9b) sowie der vierte Arm (9d) jeweils über ihren freien Fußabschnitt (10b, 10d) mit demselben, zu diesem Abschirmelement (2-7) unmittelbar benachbarten Abschirmelement (2-7) verbunden sind.

7. Schutzabdeckung (1) nach einem der Ansprüche 2 bis 6, **dadurch gekennzeichnet,**
**dass** jeder Verbinder (9, 9.1-9.4) aus einem plattenförmigen Grundkörper (G) gebildet ist, wobei der jeweilige Grundkörper (G) unter Ausbildung der Arme (9a-9d) durch Materialausschnitte in einzelne Bereiche aufgetrennt ist.

8. Schutzabdeckung (1) nach einem der Ansprüche 2 bis 7, **dadurch gekennzeichnet,**
**dass** die Abschirmelemente (2-7) jeweils mehrere, insbesondere kreisrunde, Öffnungen (B1-B4) besitzen, wobei wenigstens einer der freien Fußabschnitte (10a-10d) der Arme (9a-9d) über mindestens ein sich zumindest teilweise durch eine dieser Öffnungen (B1-B4) hindurch erstreckendes Befestigungsmittel (M) mit dem zugehörigen Abschirmelement (2-7) und/oder dem Fußabschnitt (10a - 10d) des Arms (9a-9d) eines benachbarten Verbinders (9, 9.1-9.4) verbunden ist.

9. Schutzabdeckung (1) nach einem der Ansprüche 2 oder 4 bis 7,
**dadurch gekennzeichnet,**
**dass** jedes Abschirmelement (2-7) jeweils zwei im Bereich eines Verbinders (9, 9.1-9.4) gelegene Öffnungen (B1-B4) besitzt, von denen eine der Öffnungen (B2, B4) durch ein einen der Arme (9a-9d) eines Verbinders (9, 9.1 -9.4) festlegendes Befestigungsmittel (M) verdeckt ist und die verbleibende freie Öffnung (B1, B3) so angeordnet ist, dass ein Überstand jenes, den anderen Arm (9a-9d) des Verbinders (9, 9.1-9.4) an einem unmittelbar benachbarten Abschirmelement (2-7) festlegenden Befestigungsmittels (M) bei maximaler Annäherung der ersten Schenkel (2a-7a) dieser Abschirmelemente (2-7) zumindest teilweise in der freien Öffnung (B1, B3) des anderen Abschirmelements (2-7) anordenbar ist.

10. Schutzabdeckung (1) nach einem der Ansprüche 2 bis 9, **dadurch gekennzeichnet,**
**dass** jedes Abschirmelement (2-7) jeweils vier im Bereich eines Verbinders (9, 9.1-9.4) gelegene Öffnungen (B1-B4) besitzt, von denen zwei der Öffnungen (B2, B4) durch jeweils ein einen der Arme (9a-9d) eines Verbinders (9, 9.1 -9.4) festlegendes Befestigungsmittel (M) verdeckt sind und die zwei verbleibenden freien Öffnung (B1, B3) so angeordnet sind, dass ein Überstand jener, die anderen zwei Arme (9a-9d) des Verbinders (9, 9.1 - 9.4) an einem unmittelbar benachbarten Abschirmelement (2-7) festlegenden Befestigungsmittel (M) bei maximaler Annäherung der ersten Schenkel (2a-7a) dieser Abschirmelemente (2-7) zumindest teilweise in jeweils einer der freien Öffnungen (B1, B3) des jeweils anderen Abschirmelements (2-7) anordenbar ist.

11. Schutzabdeckung (1) nach einem der Ansprüche 2 oder 4 bis 10,
**dadurch gekennzeichnet,**
**dass** alle Verbinder (9, 9.1-9.4) baugleich sind, wobei die beiden jeweils zwei Abschirmelemente (2-7) mit einem unmittelbar zwischen diesen gelegenen Abschirmelement (2-7) koppelnden Verbinder (9, 9.1-9.4) so um 180° in Bezug auf eine Längenänderungsrichtung (Z) der Schutzabdeckung (1) gegeneinander verdreht angeordnet sind, dass der erste Arm (9a) des einen Verbinders (9, 9.1-9.4) und der zweite Arm (9b) des anderen Verbinders (9, 9.1-9.4) durch ein gemeinsames Befestigungsmittel (M) an demselben zwischen den beiden anderen Abschirmelementen (2-7) gelegenen Abschirmelement (2-7) festgelegt sind.

12. Schutzabdeckung (1) nach einem der Ansprüche 3 bis 11, **dadurch gekennzeichnet,**
**dass** alle Verbinder (9, 9.1-9.4) baugleich sind, wobei die beiden jeweils zwei Abschirmelemente (2-7) mit einem unmittelbar zwischen diesen gelegenen Abschirmelement (2-7) koppelnden Verbinder (9, 9.1-9.4) so um 180° in Bezug auf eine Längenänderungsrichtung (Z) der Schutzabdeckung (1) gegeneinander verdreht angeordnet sind, dass der erste Arm (9a) des einen Verbinders (9, 9.1-9.4) und der vierte Arm (9d) des anderen Verbinders (9, 9.1-9.4) durch ein gemeinsames Befestigungsmittel (M) sowie der dritte Arm (9c) des einen Verbinders (9, 9.1-9.4) und der zweite Arm (9b) des anderen Verbinders (9, 9.1-9.4) durch ein anderes gemeinsames Befestigungsmittel (M) an demselben zwischen den beiden anderen Abschirmelementen (2-7) gelegenen Abschirmelement (2-7) festgelegt sind.

13. Schutzabdeckung (1) nach einem der Ansprüche 2 bis 12, **dadurch gekennzeichnet,**
**dass** jeweils zwischen zwei die unmittelbar zueinander benachbarte Abschirmelemente (2-7) miteinander verkettenden Verbindern (9, 9.1, 9.4) oder Paaren von Verbindern (9, 9.1, 9.4) zwei weitere Verbinder (9, 9.2, 9.3) angeordnet sind, welche in Bezug auf eine Längenänderungsrichtung (Z) der Schutzabdeckung (1) so entgegengesetzt zueinander um 90° gegenüber den anderen Verbindern (9, 9.1, 9.4) verdreht sind, dass ein Abstand ihrer einander zugewandten Mittelstege (9e) sich bei einer Annäherung der ersten Schenkel (2a-7a) der mit diesen Verbindern (9, 9.2, 9.3) gekoppelten Abschirmelemente (2-7) verkleinert oder vergrößert.

14. Schutzabdeckung (1) nach Anspruch 1,
**dadurch gekennzeichnet,**
**dass** Öffnungen (B1-B4) in den Fußabschnitten (10e, 10f) der Wandabschnitte (9f, 9g) angeordnet sind.

15. Schutzabdeckung (1) nach einem der vorhergehenden Ansprüche,
**dadurch gekennzeichnet,**
**dass** wenigstens einer der Verbinder (9, 9.1-9.4) aus zwei plattenförmigen Grundkörpern (G) gebildet ist, welche jeweils einen Wandabschnitt (9h, 9i) mit an dessen beiden freien Enden jeweils über eine Biegelinie, insbesondere ein Filmscharnier (F12-F15), angelenkten Fußabschnitten (10g, 10h; 10i, 10j) aufweisen, wobei die beiden Grundkörper (G) dieses Verbinders (9, 9.1 - 9.4) über jeweils einen ihrer Fußabschnitte (10g, 10h; 10i, 10j) miteinander verbunden sind.
